(19) **Europäisches Patentamt**
**European Patent Office**
**Office européen des brevets**

(11) **EP 4 549 630 A1**

(12) **EUROPEAN PATENT APPLICATION**
published in accordance with Art. 153(4) EPC

(43) Date of publication:
07.05.2025 Bulletin 2025/19

(21) Application number: 23830334.1

(22) Date of filing: 28.06.2023

(51) International Patent Classification (IPC):
*C25B 15/021* (2021.01)      *C25B 15/027* (2021.01)
*C25B 1/04* (2021.01)

(52) Cooperative Patent Classification (CPC):
Y02E 60/36

(86) International application number:
**PCT/CN2023/103189**

(87) International publication number:
**WO 2024/002161 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 28.06.2022 CN 202210754186

(71) Applicant: **Purification Equipment Research Institute of CSIC**
**Handan, Hebei 056000 (CN)**

(72) Inventors:
• **WANG, Jiepeng**
**Handan, Hebei 056000 (CN)**
• **JIANG, Yaxiong**
**Handan, Hebei 056000 (CN)**
• **LI, Jun**
**Handan, Hebei 056000 (CN)**

• **MA, Qiang**
**Handan, Hebei 056000 (CN)**
• **DING, Rui**
**Handan, Hebei 056000 (CN)**
• **ZHANG, Shiyuan**
**Handan, Hebei 056000 (CN)**
• **YUAN, Xianming**
**Handan, Hebei 056000 (CN)**
• **SONG, Shili**
**Handan, Hebei 056000 (CN)**
• **ZHANG, Xiaohui**
**Handan, Hebei 056000 (CN)**
• **HAO, Zhen**
**Handan, Hebei 056000 (CN)**

(74) Representative: **Habermann, Hruschka & Schnabel**
**Patentanwälte**
**Montgelasstraße 2**
**81679 München (DE)**

(54) **ELECTROLYTIC CELL OPERATION TEMPERATURE CONTROL METHOD AND SYSTEM BASED ON HEAT BALANCE CALCULATION**

(57)    The embodiments of the present disclosure disclose an electrolytic cell operation temperature control method and system based on heat balance. The method comprises: acquiring an actual cell front temperature of an electrolytic cell that is collected by a temperature collection device; if the actual cell front temperature deviates from a preset cell front temperature, controlling a refrigerant flow controller to control an inlet temperature of an electrolyte, wherein the preset cell front temperature is determined based on a preset cell end temperature, a correction coefficient, net heat power of the electrolytic cell, a volume flowrate of the electrolyte, a density of the electrolyte and a specific heat capacity of the electrolyte; within a current iteration period, determining an opening degree of the refrigerant flow controller based on the actual cell front temperature and the preset cell front temperature; and at the beginning of a subsequent iteration period, determining a set cell front temperature after iteration based on the preset cell end temperature, the correction coefficient, size information of the electrolytic cell, an actually measured voltage, an actually measured current, an actually measured surface temperature of the electrolytic cell, an actually measured ambient temperature, the volume flowrate of the electrolyte, the density of the electrolyte and the specific heat capacity of the electrolyte.

**(Cont. next page)**

FIG.1

2

**Description**

RELATED APPLICATION

The present disclosure claims the priority of the Chinese invention patent application with an application number of 202210754186.4 filed on June 28, 2022, the disclosure of which is incorporated herein by reference in its entirety.

TECHNICAL FIELD

The present disclosure relates to the technical field of hydrogen and oxygen production by water electrolysis, and particularly to an electrolytic cell operation temperature control method and system based on heat balance.

BACKGROUND

Hydrogen and oxygen production by water electrolysis is a reaction process of converting electric energy into chemical energy. Due to the limitation of operating conditions, the energy conversion efficiency of an industrial electrolytic cell cannot reach 100%, and the unconverted electric energy will be converted into heat. When the heat dissipation power of an electrolytic cell body is less than the heat generation power, the temperature of the electrolytic cell gradually increases, which is reflected in that a temperature of an electrolyte at an outlet of the electrolytic cell is higher than that at an inlet thereof. In order to maintain the normal working of the electrolytic cell, it is necessary to control the operating temperature of the electrolytic cell.

The conventional water electrolytic cell temperature control method includes a cell front temperature control method and a cell end temperature control method. A control logic of the cell front temperature control method is to set and monitor a cell front temperature, determine an operation on a cooling system according to an actual cell front temperature and the set cell front temperature, and then adjust the actual cell front temperature. But this method fails to consider the influence brought by the power fluctuation of the electrolytic cell, resulting in a great change in the cell end temperature, an unstable operation of the electrolytic cell and a high energy consumption in an electrolysis process. A control logic of the cell end temperature control method is to set and monitor a cell end temperature, determine an operation on a cooling system according to an actual cell end temperature and the set cell end temperature, and then adjust the actual cell end temperature. In this method, due to the hysteresis of the heat exchange of an electrolyte and the monitoring of the cell end temperature, the cell front temperature and cell end temperature both fluctuate greatly, the performance of the electrolytic cell is unstable and the energy consumption is high in an electrolytic process.

SUMMARY

In view of the above problems in the prior art, the embodiments of the present disclosure provide an electrolytic cell operating temperature control method and system based on heat balance, so as to realize a stable control of an operating temperature of an electrolytic cell.

An electrolytic cell operating temperature control method based on heat balance according to the embodiments of the present disclosure includes: acquiring an actual cell front temperature of an electrolytic cell that is collected by a temperature collection device;

if the actual cell front temperature deviates from a preset cell front temperature, controlling a refrigerant flow controller to control an inlet temperature of an electrolyte, wherein the preset cell front temperature is determined based on a preset cell end temperature, a correction coefficient, net heat power of the electrolytic cell, a volume flowrate of the electrolyte, a density of the electrolyte and a specific heat capacity of the electrolyte;
within a current iteration period, determining an opening degree of the refrigerant flow controller based on the actual cell front temperature and the preset cell front temperature; and
at the beginning of a subsequent iteration period of the current iteration period, determining a set cell front temperature after iteration based on the preset cell end temperature, the correction coefficient, size information of the electrolytic cell, an actually measured voltage, an actually measured current, an actually measured surface temperature of the electrolytic cell, an actually measured ambient temperature, the volume flowrate of the electrolyte, the density of the electrolyte and the specific heat capacity of the electrolyte, and adjusting the opening degree of the refrigerant flow controller based on the set cell front temperature after iteration.

In some embodiments of the present disclosure, the preset cell front temperature is determined by a formula:

$$T_{\text{preset front}} = T_{\text{preset end}} - \triangle t = T_{\text{preset end}} - \alpha \times W_{\text{net}} \div (q_{\text{electrolyte}}\, \rho_{\text{electrolyte}}\, c_{\text{electrolyte}}),$$

where $T_{\text{preset front}}$ is a preset cell front temperature; $T_{\text{preset end}}$ is a preset cell end temperature; $\Delta t$ is an inlet-outlet temperature rise of the electrolytic cell; $\alpha$ is a correction coefficient; $W_{\text{net}}$ is net heat power of the electrolytic cell; $q_{\text{electrolyte}}$ is a volume flowrate of the electrolyte; $\rho_{\text{electrolyte}}$ is a density of the electrolyte; and $c_{\text{electrolyte}}$ is a specific heat capacity of the electrolyte.

In some embodiments of the present disclosure, a formula of the net heat power of the electrolytic cell is:

$$W_{\text{net}} = W_{\text{generation}} - W_{\text{dissipation}},$$

where $W_{\text{net}}$ is net heat power of the electrolytic cell, and $W_{\text{generation}}$ is heat generation power of the electrolytic cell;

$$W_{\text{generation}} = \sum_{m=1}^{m} (V_m - V_n) \times I_m$$

$W_{\text{dissipation}}$ is heat dissipation power of the electrolytic cell; $V_m$ is a cell voltage of a m-th cell of the electrolytic cell; $V_n$ is a thermal neutral voltage of water in a working state; $I_m$ is a cell current of the m-th cell of the electrolytic cell; and m is the number of cells in the electrolytic cell.

In some embodiments of the present disclosure, when the heat generation power of the electrolytic cell is to be calculated, if the electrolytic cell is a series electrolytic cell, $W_{\text{generation}}$ is denoted as $W_{\text{generation-series}}$; in order to simplify the calculation, the cell voltage may be replaced with an average cell voltage, the cell current may be replaced with a total current, and the formula is specifically simplified as:

$$W_{\text{generation-series}} = \sum_{m=1}^{m} (V_m - V_n) \times I_m = (V_{\text{cell}} - 1.48) \times I_{\text{cell}} \times m = (V \div m - 1.48) \times I \times m$$

$$= VI - 1.48mI;$$

if the electrolytic cell is a parallel electrolytic cell, $W_{\text{generation}}$ is denoted as $W_{\text{generation-parallel}}$, where the cell voltage is replaced with the average cell voltage, the cell current is replaced with half of the total current, and the formula is specifically simplified as:

$$W_{\text{generation-parallel}} = \sum_{m=1}^{m} (V_m - V_n) \times I_m = (V_{\text{cell}} - 1.48) \times I_{\text{cell}} \times m = (V \div m \times 2 - 1.48) \times I \div 2 \times m = VI - 0.74mI,$$

where V is a total voltage of the electrolytic cell, I is a total current of the electrolytic cell, $V_{\text{cell}}$ is an average cell voltage of the electrolytic cell.

In some embodiments of the present disclosure, the heat dissipation power of the electrolytic cell is a sum of convection heat dissipation power of the electrolytic cell relative to a surrounding environment and radiation heat dissipation power of the electrolytic cell relative to the surrounding environment, and specifically:

$$W_{\text{dissipation}} = W_{\text{convection}} + W_{\text{radiation}},$$

where $W_{\text{convection}}$ is convection heat dissipation power of the electrolytic cell relative to the surrounding environment; $W_{\text{radiation}}$ is radiation heat dissipation power of the electrolytic cell relative to the surrounding environment;

$$W_{\text{convection}} = W_{\text{cylinder convection}} + W_{\text{end convection}}$$

where $W_{\text{cylinder convection}}$ is convection heat dissipation power of a side surface of a cylinder of the electrolytic cell relative to the surrounding environment, and $W_{end\ convection}$ is convection heat dissipation power of both end surfaces of the cylinder of the electrolytic cell relative to the surrounding environment;

$W_{cylinder\ convection} = h_{cylinder} {}^*A_{cylinder} {}^*\Delta T_{cylinder}$, where $\Delta T_{cylinder}$ is a difference between a temperature of the side surface of the cylinder of a cell body of the electrolytic cell and the ambient temperature, i.e.,

$$\triangle\ T_{cylinder} = T_{1cylinder} - T_2,$$

$T_{1cylinder}$ is a temperature of the side surface of the cylinder of the cell body, and $T_2$ is an ambient temperature; $A_{cylinder}$ is a heat dissipation area of the side surface of the cylinder of the electrolytic cell, where the cylinder has a diameter D and a length L, so that $A_{cylinder} = \pi^*D^*L$; $h_{cylinder}$ is a heat dissipation coefficient of the side surface of the cylinder, and $h_{cylinder} = Nu^*\lambda/D$, where $\lambda$ is a thermal conductivity of air; Nu is a Nusselt number, and Nu = C*(Gr*Pr)", where Pr is a Planck constant, Gr is a Grashof number and Gr-$(\beta gD^3\Delta T)/v^2$, n is an exponent of a Nusselt number equation, and the values of C and n are both determined based on the value of Gr, where a volume expansion coefficient $\beta = 1/(273+t)$, t is a qualitative temperature and t = $(T_{1cylinder}+T_2)/2$, and v is an air viscosity.

In some embodiments of the present disclosure, the values of C and n are both determined based on the value of Gr, and specifically,

if the Grashof number is calculated to be between $10^4$ and $5.76\times 10^8$, the convection heat dissipation of the side surface of the cylinder of the electrolytic cell is laminar, where C is 0.48 and n is 0.25; if the Grashof number is calculated to be between $5.76\times 10^8$ and $4.65\times 10^9$, the convection heat dissipation of the side surface of the cylinder of the electrolytic cell is in a transition zone, where C is 0.0445 and n is 0.37; and if the Grashof number is calculated to be greater than $4.65\times 10^9$, the convection heat dissipation of the side surface of the cylinder of the electrolytic cell is turbulent, where C is 0.1 and n is 1/3.

In some embodiments of the present disclosure, the convection heat dissipation of the end surfaces of the electrolytic cell is:

$$W_{end\ convection} = h_{end}{}^*A_{end}{}^*\triangle T_{end},$$

where $\Delta T$ end is a difference between a temperature of the end surface of the cell body of the electrolytic cell and the ambient temperature, i.e.,

$$\triangle\ T_{end} = T_{1\ end} - T_2,$$

$T_{1end}$ is a temperature of the end surface of the cell body, and $T_2$ is an ambient temperature; $A_{end}$ is a heat dissipation area of the end surface of the cylinder of the electrolytic cell, the end surface of the cylinder has a diameter D, so that $A_{end} = 2\times 1/4\pi^*D^2 = 0.5\pi^*D^2$; $h_{end}$ is a heat dissipation coefficient of the end surface of the cylinder, and $h_{end} = Nu^*\lambda/D$, where $\lambda$ is a thermal conductivity of air; Nu is a Nusselt number, and Nu = C*(Gr*Pr)", where Pr is a Planck constant, Gr is a Grashof number and Gr=$(\beta gD^3\Delta T)/v^2$, n is an exponent of a Nusselt number equation, and the values of C and n are both determined based on the value of Gr, where a volume expansion coefficient $\beta = 1/(273+t)$, t is a qualitative temperature and t = $(T_{1end}+T_2)/2$, and v is an air viscosity.

In some embodiments of the present disclosure, the values of C and n are both determined based on the value of Gr, and specifically,

if the Grashof number is calculated to be between $10^4$ and $3\times 10^9$, the convection heat dissipation of both end surfaces of the cylinder of the electrolytic cell is laminar, where C is 0.59 and n is 0.25; if the Grashof number is calculated to be between $3\times 10^9$ and $2\times 10^{10}$, the convection heat dissipation of both end surfaces of the cylinder of the electrolytic cell is in a transition zone, where C is 0.0292 and n is 0.39; and if the Grashof number is calculated to be greater than $2\times 10^{10}$, the convection heat dissipation of both end surfaces of the cylinder of the electrolytic cell is turbulent, where C is 0.11 and n is 1/3.

In some embodiments of the present disclosure, a formula of the radiation heat dissipation power of the electrolytic cell relative to the surrounding environment is:

$$W_{radiation} = W_{end\ radiation} + W_{cylinder\ radiation}$$

$$W_{end\ radiation} = A_{end} * \varepsilon * \sigma * \{[\ (T_{1\ end}+273)/100]^4 - [(T_2+273)/100]^4\},$$

$$W_{cylinder\ radiation} = A_{cylinder} * \varepsilon * \sigma * \{[\ (T_{1\ cylinder}+273)/100]^4 - [(T_2+273)/100]^4\},$$

where $\varepsilon$ is a blackness and valued according to material characteristics of the surface of the electrolytic cell; and $\sigma$ is a blackbody radiation coefficient and valued as 5.67W/(m$^2$·K$^4$).

In some embodiments of the present disclosure, the determining a set cell front temperature after iteration based on the preset cell end temperature, the correction coefficient, size information of the electrolytic cell, an actually measured voltage, an actually measured current, an actually measured surface temperature of the electrolytic cell, an actually measured ambient temperature, the volume flowrate of the electrolyte, the density of the electrolyte and the specific heat capacity of the electrolyte includes: determining a qualitative temperature and a difference between the cell body surface temperature of the electrolytic cell and the ambient temperature based on the actually measured surface temperature of the electrolytic cell and the actually measured ambient temperature, and determining a volume expansion coefficient; determining the Grashof number in conjunction with the size information of the electrolytic cell, and determining the convection heat dissipation power of the electrolytic cell relative to the surrounding environment and the convection heat dissipation power of the electrolytic cell relative to the surrounding environment; determining the net heat power of the electrolytic cell in conjunction with the actually measured voltage and the actually measured current; and determining the set cell front temperature after iteration in conjunction with the preset cell end temperature, the correction coefficient, the volume flowrate of the electrolyte, the density of the electrolyte and the specific heat capacity of the electrolyte.

In some embodiments of the present disclosure, the electrolytic cell operating temperature control method based on heat balance further includes: after the electrolytic cell operates for a preset duration, determining an amended correction coefficient based on the actually measured cell front temperature, the actually measured cell end temperature, the net heat power of the electrolytic cell, the volume flowrate of the electrolyte, the density of the electrolyte and the specific heat capacity of the electrolyte; and recalculating the set cell front temperature after iteration based on the amended correction coefficient.

The embodiments of the present disclosure further provide an electrolytic cell operating temperature control system based on heat balance , including: a temperature collection device configured to collect an actual cell front temperature of an electrolytic cell; and a control unit configured to acquire the actual cell front temperature, and control a refrigerant flow controller to control an inlet temperature of an electrolyte when the actual cell front temperature deviates from a preset cell front temperature, wherein the preset cell front temperature is determined based on a preset cell end temperature, a correction coefficient, net heat power of the electrolytic cell, a volume flowrate of the electrolyte, a density of the electrolyte and a specific heat capacity of the electrolyte; within a current iteration period, determine an opening degree of the refrigerant flow controller based on the actual cell front temperature and the preset cell front temperature; and at the beginning of a subsequent iteration period of the current iteration period, determine a set cell front temperature after iteration based on the preset cell end temperature, the correction coefficient, size information of the electrolytic cell, an actually measured voltage, an actually measured current, an actually measured surface temperature of the electrolytic cell, an actually measured ambient temperature, the volume flowrate of the electrolyte, the density of the electrolyte and the specific heat capacity of the electrolyte, and adjust the opening degree of the refrigerant flow controller based on the set cell front temperature after iteration.

As compared with the prior art, the electrolytic cell operating temperature control method and system based on heat balance according to the embodiments of the present disclosure have the advantageous effects of improving the control precision and sensitivity of the electrolytic cell operating temperature, avoiding a large fluctuation of the electrolytic cell temperature, and improving the safety and stability of the operation of the electrolytic cell. By ensuring the relative stability of the electrolytic cell temperature, the operating temperature of the electrolytic cell can be appropriately increased, and then the energy consumption in the electrolysis process can be reduced. Further, it is possible to better adapt to the wide fluctuation of the input power of the electrolytic cell, which is more advantageous than the conventional electrolytic cell temperature control method, and the hydrogen production system by water electrolysis achieves better cell temperature stability and lower energy consumption. In addition, being different from the passive control of the cell temperature of the electrolytic cell at present, where the system issues an instruction of adjusting the cell temperature only after the cell temperature has been changed, the technical solutions in the above embodiments of the present disclosure are under an active control, where although the cell temperature does not change immediately when the operating parameters of the electrolytic cell and the surrounding environment have been changed, the electrolyte supply temperature can be changed in advance based on theoretical , so that the cell temperature of the electrolytic cell operates smoothly.

BRIEF DESCRIPTION OF THE DRAWINGS

In order to more clearly explain the technical solutions in the embodiments of the present disclosure or in the prior art, the drawings required in the description of the embodiments or the prior art will be briefly introduced below.

FIG. 1 illustrates a control schematic diagram where an electrolytic cell operating temperature control method based on heat balance according to an embodiment of the present disclosure is applied to a series electrolytic cell; and
FIG. 2 illustrates a control schematic diagram where an electrolytic cell operating temperature control method based on heat balance according to an embodiment of the present disclosure is applied to a parallel electrolytic cell.

DETAILED DESCRIPTION OF THE EMBODIMENTS

In order that persons skilled in the art can better understand the technical solutions of the present disclosure, the present disclosure will be described in detail below with reference to the drawings and the specific embodiments.

Various solutions and features of the present disclosure are described here with reference to the drawings.

These and other features of the present disclosure will become apparent from the following description of the exemplary embodiments given as non-limiting examples with reference to the drawings.

It should also be understood that although the present disclosure has been described with reference to some specific examples, persons skilled in the art can definitely realize many other equivalent forms of the present disclosure, which have the features included in the embodiments and therefore are all within the protection scope defined herein.

The above and other aspects, features, and advantages of the present disclosure will become more apparent in view of the following detailed description when taken in conjunction with the drawings.

Hereinafter, specific embodiments of the present disclosure will be described with reference to the drawings. However, it should be understood that the involved embodiments are only examples of the present disclosure, which may be implemented in various ways. Well-known and/or repeated functions and structures are not described in detail, in order to identify a real intention according to historical operations of a user, and avoid the present disclosure from being obscured by unnecessary or superfluous detail details. Therefore, the specific structural and functional details set forth herein are not intended to be limiting, but merely as a basis for the claims and as a representative basis for teaching persons skilled in the art to variously use the present disclosure in virtually any appropriately detailed structure.

The Description may use the phrase "in an embodiment", "in another embodiment", "in still another embodiment" or "in other embodiments", each of which may refer to one or more of the same or different embodiments according to the present disclosure.

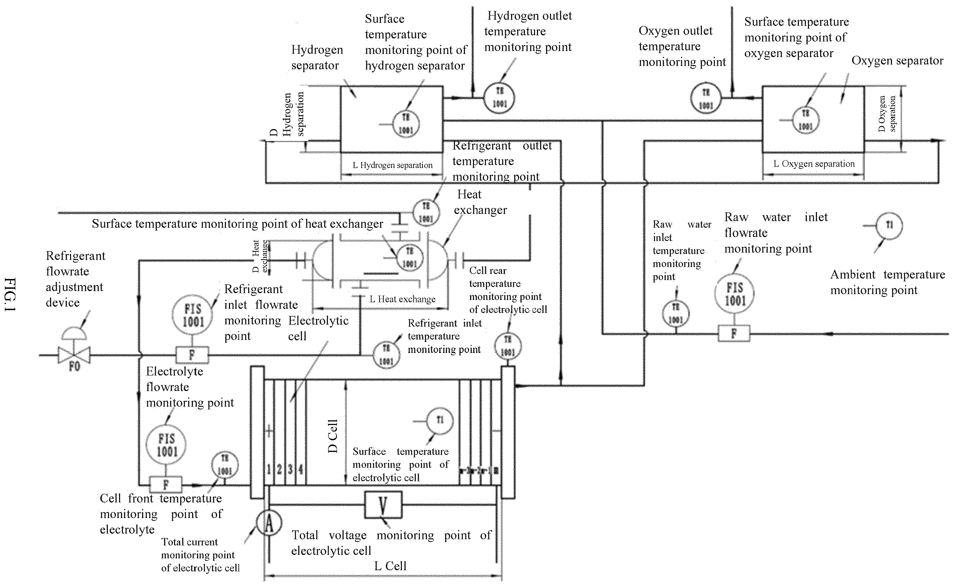

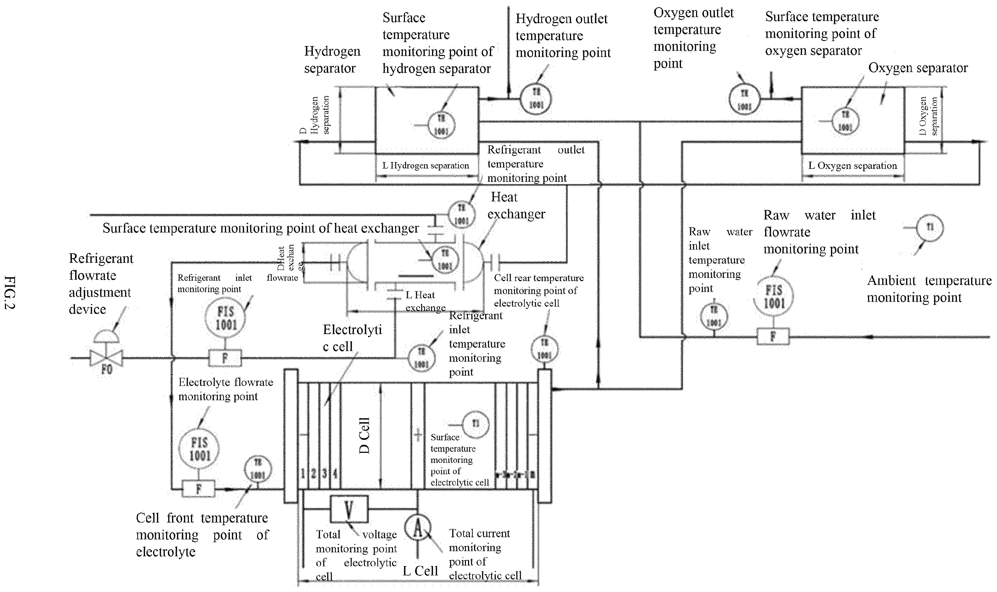

The embodiments of the present disclosure provide an electrolytic cell operating temperature control method based on heat balance, which may be applied to an electrolytic apparatus with a data collection component, a control unit and corresponding execution components. Specifically, the data collection component may include a data collection device for collecting a cell front temperature, a cell end temperature, a surface temperature of an electrolytic cell, an ambient temperature, a total voltage and a total current of the electrolytic cell, a volume flowrate of an electrolyte, etc., and the collection device may also be used for automatically monitoring and transmitting monitoring data to the control unit, so as to perform a balance of the cell front temperature of the electrolytic cell. The control unit executes a cell temperature control logic and controls an operation of a corresponding execution system, which may be a refrigerant flow controller, a refrigerant generator, or the like. The control method is specifically a heat balance method, a control logic of which is that a user gives a set value for the cell end temperature, calculates net heat according to the real-time state of the system, then calculates an inlet temperature theoretical value and assigns the inlet temperature theoretical value to the set value of the cell front temperature; the control system controls the operation of the execution system by comparing the actually measured cell front temperature with the set value of the cell front temperature, so as to adjust an inlet temperature of the electrolyte and realize the stable control of the electrolytic cell operating temperature. As illustrated in FIGS. 1 and 2, the method specifically includes: acquiring an actual cell front temperature of an electrolytic cell that is collected by a temperature collection device; if the actual cell front temperature deviates from a preset cell front temperature, controlling a refrigerant flow controller to control an inlet temperature of an electrolyte, in which the preset cell front temperature is determined based on a preset cell end temperature, a correction coefficient, net heat power of the electrolytic cell, a volume flowrate of the electrolyte, a density of the electrolyte and a specific heat capacity of the electrolyte.

In this embodiment, when it is necessary to decrease or increase the temperature of the electrolyte, the usual way is to increase or decrease a cooling water flowrate, which is generally realized by adjusting an opening degree of a diaphragm valve. In addition, the temperature of the electrolyte may also be adjusted by adjusting a refrigerant temperature, or adjusting a heat exchange area (e.g., only one heat exchanger is started at first, and another heat exchanger is started when the heat exchange needs to be increased), or adjusting a heat exchange coefficient (increasing the flowrate of the electrolyte), or starting any other heat exchange mode, such as air cooling.

In some embodiments of the present disclosure, the preset cell front temperature is determined by a formula:

$$T_{\text{preset front}} = T_{\text{preset end}} - \triangle t = T_{\text{preset end}} - \alpha \times W_{\text{net}} \div (q_{\text{electrolyte}} \, \rho_{\text{electrolyte}} \, c_{\text{electrolyte}}),$$

**where** $T_{\text{preset front}}$ is a preset cell front temperature; $T_{\text{preset end}}$ is a preset cell end temperature; $\Delta t$ is an inlet-outlet temperature rise of the electrolytic cell; $\alpha$ is a correction coefficient; $W_{\text{net}}$ is net heat power of the electrolytic cell; $q_{\text{electrolyte}}$ is a volume flowrate of the electrolyte; $\rho_{\text{electrolyte}}$ is a density of the electrolyte; and $c_{\text{electrolyte}}$ is a specific heat capacity of the electrolyte.

In this embodiment, a mass flowmeter may also be used instead of a volume flowmeter. But at this time (when the mass flowmeter is used), it is necessary to replace $q_{\text{electrolyte}}$ and $\rho_{\text{electrolyte}}$ with $m_{\text{electrolyte}}$, without specially measuring the volume flowrate and the density. In the actual, the corresponding may also be carried out using the volume flowrate in cooperation with the volume and the specific heat capacity, which is not explicitly limited here.

Specifically, a heat balance formula: $Q_{\text{electrolyte}} = m_{\text{electrolyte}} \, c_{\text{electrolyte}} \Delta t$ is divided by time at both sides to obtain:

$$W_{\text{net}} = q_{\text{electrolyte}} \, \rho_{\text{electrolyte}} \, c_{\text{electrolyte}} \, \triangle t,$$

where $q_{\text{electrolyte}}$ is a volume flowrate of the electrolyte, $\rho_{\text{electrolyte}}$ is a density of the electrolyte, and $c_{\text{electrolyte}}$ is a specific heat capacity of the electrolyte,

a)

$$t = W_{\text{net}} \div (q_{\text{electrolyte}} \, \rho_{\text{electrolyte}} \, c_{\text{electrolyte}}),$$

$$T_{\text{preset front}} = T_{\text{preset end}} - \triangle t = T_{\text{preset end}} - \alpha \times W_{\text{net}} \div (q_{\text{electrolyte}} \, \rho_{\text{electrolyte}} \, c_{\text{electrolyte}}),$$

where $T_{\text{preset front}}$ is a function of a voltage V, a current I, the number m of cells, a length L, a diameter D and cell body surface temperatures $T_{1 \text{ cylinder}}$ and $T_{1 \text{ end}}$ of the electrolytic cell, an ambient temperature $T_2$, a volume flowrate $q_{\text{electrolyte}}$ of the electrolyte, a density $\rho_{\text{electrolyte}}$ of the electrolyte, and a specific heat capacity $C_{\text{electrolyte}}$ of the electrolyte.

In this embodiment, a formula of the net heat power of the electrolytic cell is:

$$W_{\text{net}} = W_{\text{generation}} - W_{\text{dissipation}},$$

where $W_{\text{net}}$ is a function of a voltage V, a current I, the number m of cells, a length L, a diameter D and cell body surface temperatures $T_{1 \text{ cylinder}}$ and $T_{1 \text{ end}}$ of the electrolytic cell, and an ambient temperature $T_2$.

$$W_{\text{generation}} = \sum_{m=1}^{m} (V_m - V_n) \times I_m$$

where $W_{\text{net}}$ is net heat power of the electrolytic cell; $W_{\text{generation}}$ is heat generation power of the electrolytic cell; $W_{\text{dissipation}}$ is heat dissipation power of the electrolytic cell; $V_m$ is a cell voltage of a m-th cell of the electrolytic cell; $V_n$ is a thermal neutral voltage of water in a working state; $I_m$ is a cell current of the m-th cell of the electrolytic cell; and m is the number of cells in the electrolytic cell.

In this embodiment, when the heat generation power of the electrolytic cell is to be calculated, since the electrolytic cell is classified into a parallel electrolytic cell and a series electrolytic cell, the corresponding methods should be adopted for calculation respectively, in which for the series electrolytic cell, the cell voltage is simplified as a value obtained by dividing a total voltage with the number of cells, and the cell current is equal to a total current; and for the parallel electrolytic cell, the cell voltage is simplified as a value obtained by dividing the total voltage with the number of cells multiplied by 2, and the cell current is simplified as a value obtained by dividing the total current with 2; and the thermal neutral voltage is valued as 1.48. Specifically:

if the electrolytic cell is a series electrolytic cell, $W_{\text{generation}}$ is denoted as $W_{\text{generation-series}}$, and specifically:

$$W_{\text{generation-series}}=(V_{\text{cell}} -1.48)\times I_{\text{cell}} \times m= (V \div m-1.48)\times I\times m =VI-1.48mI,$$

if the electrolytic cell is a parallel electrolytic cell, $W_{\text{generation}}$ is denoted as $W_{\text{generation-parallel}}$, and specifically:

$$W_{\text{generation-parallel}}=(V_{\text{cell}} -1.48)\times I_{\text{cell}} \times m =(V\div m\times 2-1.48)\times I \div 2\times m = VI-0.74mI,$$

where V is a total voltage of the electrolytic cell, I is a total current of the electrolytic cell, $V_{\text{cell}}$ is an average cell voltage of the electrolytic cell, and $I_{\text{cell}}$ is an average cell current of the electrolytic cell; that is, the heat generation power of the electrolytic cell is a function of the voltage V, the current I and the number of cells m of the electrolytic cell.

It should be noted that the calculation of the cell voltage in the above calculation formula is only an approximate simplified algorithm, and in actual calculation, a monitoring device may be used to monitor each of the cell voltages to obtain more accurate cell voltages. Similarly, for the parallel electrolytic cell, $I_{\text{cell}}= I\div 2$, which is merely limited to an ideal state, and the current of the parallel electrolytic cell is biased during the actual operation, i.e., the currents at a left half and a right half of the electrolytic cell are not equal, which can be solved by installing a current monitoring device between a left negative terminal plate and a power source and between a right negative terminal plate and the power source, respectively.

Further, in this embodiment, the heat dissipation power of the electrolytic cell is a sum of convection heat dissipation power of the electrolytic cell relative to the surrounding environment and radiation heat dissipation power of the electrolytic cell relative to the surrounding environment, and specifically:

$$W_{\text{dissipation}} = W_{\text{convection}} + W_{\text{radiation}},$$

where $W_{\text{convection}}$ is convection heat dissipation power of the electrolytic cell relative to the surrounding environment, and $W_{\text{radiation}}$ is radiation heat dissipation power of the electrolytic cell relative to the surrounding environment;

$$W_{\text{convection}} = W_{\text{cylinder convection}} +W_{\text{end convection}}$$

where $W_{\text{cylinder convection}}$ is convection heat dissipation power of a side surface of a cylinder of the electrolytic cell relative to the surrounding environment, and $W_{\text{end convection}}$ is convection heat dissipation power of both end surfaces of the cylinder of the electrolytic cell relative to the surrounding environment;

where $\Delta T$ is a difference between the cell body surface temperature of the electrolytic cell and the ambient temperature, i.e.,

a)

$$T = T_1- T_2,$$

$T_1$ is a cell body surface temperature and $T_2$ is an ambient temperature; A is a heat dissipation area of the electrolytic cell, and if the electrolytic cell is shaped as a cylinder with a diameter of D and a length of L, an area of a side surface of the cylinder is $A_{\text{cylinder}} =\pi *D*L$, and an area of an end surface thereof is $A_{\text{end}} = 2* 1/4\pi *D^2= 0.5\pi *D^2$; h is a heat dissipation coefficient, and h= $Nu*\lambda /D$, where $\lambda$ is a thermal conductivity of air; Nu is a Nusselt number, and Nu = $C* (Gr*Pr)''$, where Pr is a Planck constant, Gr is a Grashof number and Gr=$(\beta gD^3\Delta T)/ v^2$, n is an exponent of a Nusselt number equation, and the values of C and n are both determined based on the value of Gr, where a volume expansion coefficient $\beta = 1/(273+t)$, 273 is a value at 0 °C in an absolute temperature system and specifically 273.15 K, t is a qualitative temperature and t = $(T_1+T_2)/2$, and v is an air viscosity. During actual operation, for the low-temperature water electrolysis apparatus, the cell body surface temperature $T_1$ ranges from 50°C to 110°C and the ambient temperature $T_2$ ranges from 5°C to 40°C, which are substituted into the above formula to obtain the qualitative temperature t as 27.5°C to 75°C.

The value of the qualitative temperature t is substituted into the formula $\beta= 1/(273+t)$, and the value of $\beta$ ranges from 0.0029 to 0.0033.

The value of ΔT ranges from 10°C to 105 °C.

The gravity acceleration g is valued as 9.8.

In the range of the qualitative temperature, the air viscosity v is valued as 0.00001897 m$^2$/s.

Further, the values of β, g, ΔT, v and the diameter D of the electrolytic cell are substituted into the Grashof number Gr=(βgD$^3$ΔT)/v$^2$. In this embodiment, the values of C and n are both determined based on the value of Gr, and the air heat conductivity λ is 0.029W/(m*K); the Planck constant Pr is valued as 0.697; so far, W $_{convection}$ is simplified as the length L and the diameter D of the electrolytic cell or a container, and specifically: for the side surface of the electrolytic cell, if the Grashof number is between 10$^4$ and 5.76×10$^8$, the convection heat dissipation of the side surface of the cylinder of the cell body is laminar, where C is 0.48 and n is 0.25. When it is determined that the convection heat dissipation of the side surface of the cylinder of the cell body is laminar,

$$W_{\text{cylinder convection}} = 3.8282LD^{0.75}(T_1\text{-}T_2)^{1.25};$$

here, β is valued as 0.0031 and Pi π is valued as 3.14.

If the Grashof number is calculated to be between 5.76×10$^8$ and 4.65×10$^9$, the convection heat dissipation of the side surface of the cylinder of the cell body is in a transition zone, where C is 0.0445 and n is 0.37. When it is determined that the convection heat dissipation of the side surface of the cylinder of the cell body is in the transition zone,

$$W_{\text{cylinder convection}} = 3.0372LD^{1.11}(T_1\text{-}T_2)^{1.37};$$

here, β is valued as 0.0031 and Pi π is valued as 3.14.

If the Grashof number is calculated to be greater than 4.65×10$^9$, the convection heat dissipation of the side surface of the cylinder of the cell body is turbulent, where C is 0.1 and n is 1/3. When it is determined that the convection heat dissipation of the side surface of the cylinder of the cell body is turbulent,

$$W_{\text{cylinder convection}} = 3.5056LD(T_1\text{-}T_2)^{4/3}.$$

here, β is valued as 0.0031 and Pi π is valued as 3.14.

For the end surface of the electrolytic cell, if the Grashof number is calculated to be between 10$^4$ and 3×10$^9$, the convection heat dissipation of both end surfaces of the cylinder of the electrolytic cell is laminar, where C is 0.59 and n is 0.25. When the convection heat dissipation of the end surfaces of the cylinder of the cell body is laminar,

$$W_{\text{end convection}} = 2.3539LD^{1.75}(T_2\text{-}T_1)^{1.25};$$

here, β is valued as 0.0031 and Pi π is valued as 3.14.

If the Grashof number is calculated to be between 3×10$^9$ and 2×10$^{10}$, the convection heat dissipation of the end surfaces of the cylinder of the cell body is in a transition zone, where C is 0.0292 and n is 0.39. When the convection heat dissipation of the end surfaces of the cylinder of the cell body is in the transition zone,

$$W_{\text{end convection}} = 1.42586LD^{2.17}(T_2\text{-}T_1)^{1.39};$$

here, β is valued as 0.0031 and Pi π is valued as 3.14.

If the Grashof number is calculated to between 3×10$^9$ and 2× 10$^{10}$, the convection heat dissipation of the end surface of the cylinder of the cell body is in a transition zone, where C is 0.0292 and n is 0.39. When it is determined that the convection heat dissipation of the end surface of the cylinder of the cell body is in a transition zone,

$$W_{\text{end convection}} = 1.42586LD^{2.17}(T_2\text{-}T_1)^{1.39};$$

here, β is valued as 0.0031 and Pi π is valued as 3.14.

If the Grashof number is calculated to be greater than $2\times10^{10}$, the convection heat dissipation of the end surface of the cylinder of the cell body is turbulent, where C is 0.11 and n is 1/3. When it is determined that the convection heat dissipation of the end surface of the cylinder of the cell body is turbulent,

$$W_{\text{end convection}} = 1.94897LD(T_1\text{-}T_2)^{4/3};$$

here, $\beta$ is valued as 0.0031 and Pi $\pi$ is valued as 3.14.

Further, in this embodiment, the calculation formula of the radiation heat dissipation power of the electrolytic cell relative to the surrounding environment is as follows:

$$W_{\text{radiation}} = W_{\text{end radiation}} + W_{\text{cylinder radiation}}$$

$$W_{\text{end radiation}} = A_{\text{end}}*\varepsilon*\sigma*\{[(T_{1\text{end}}+273)/100]^4 - [(T_2+273)/100]^4\},$$

$$W_{\text{cylinder radiation}} = A_{\text{cylinder}}*\varepsilon*\sigma*\{[(T_{1\text{cylinder}}+273)/100]^4 - [(T_2+273)/100]^4\},$$

where the area of the side surface of the cylinder is $A_{\text{cylinder}} = \pi*D*L$, and the area of the end surface of the cylinder is $A_{\text{end}} = 2*1/4\pi*D^2 = 0.5\pi*D^2$; and $\varepsilon$ is a blackness and valued as 0.85.

It should be noted that the blackness is a surface characteristic of an object, and the blackness of the surfaces of different electrolytic cells is different, so the specific value thereof is selected according to the actual situation.

$\sigma$ is a blackbody radiation coefficient, which is valued as $5.67W/(m^2 \cdot K^4)$;

$$W_{\text{radiation}} = 7.5666\, D^2\, \{[(T_{1\,\text{end}}+273)/100]^4 - [(T_2+273)/100]^4\} + 15.1332\, D*L\{[(T_{1\,\text{cylinder}}+273)/100]^4 - [(T_2+273)/100]^4\}$$

That is, $W_{\text{radiation}}$ is a function of the length L, the diameter D, the cell body surface temperatures $T_{1\,\text{end}}$ and $T_{1\,\text{cylinder}}$ and the ambient temperature $T_2$ of the electrolytic cell.

Within a current iteration period, determining an opening degree of the refrigerant flow controller based on the actual cell front temperature and the preset cell front temperature; and at the beginning of a subsequent iteration period of the current iteration period, determining a set cell front temperature after iteration based on the preset cell end temperature, the correction coefficient, size information of the electrolytic cell, an actually measured voltage, an actually measured current, an actually measured surface temperature of the electrolytic cell, an actually measured ambient temperature, the volume flowrate of the electrolyte, the density of the electrolyte and the specific heat capacity of the electrolyte, and adjusting the opening degree of the refrigerant flow controller based on the set cell front temperature after iteration. It should be noted that the volume flowrate of the electrolyte and the density of the electrolyte may be replaced with a mass flowrate.

In some embodiments of the present disclosure, the determining a set cell front temperature after iteration based on the preset cell end temperature, the correction coefficient, size information of the electrolytic cell, an actually measured voltage, an actually measured current, an actually measured surface temperature of the electrolytic cell, an actually measured ambient temperature, the volume flowrate of the electrolyte, the density of the electrolyte and the specific heat capacity of the electrolyte specifically includes:

determining a qualitative temperature and a difference between the cell body surface temperature of the electrolytic cell and the ambient temperature based on the actually measured surface temperature of the electrolytic cell and the actually measured ambient temperature, and determining a volume expansion coefficient; determining the Grashof number based on the volume expansion coefficient, the difference between the cell body surface temperature and the ambient temperature, the gravity acceleration, the size information of the electrolytic cell and the air viscosity; determining a constant C and an exponent n of a Nusselt equation according to the Grashof number, and determining convection heat dissipation power of the electrolytic cell relative to the surrounding environment in conjunction with the Planck constant; determining radiation heat dissipation power of the electrolytic cell relative to the surrounding environment in conjunction with a surface blackness, an area, a blackbody radiation constant, the surface temperature of the electrolytic cell and the ambient temperature; determining net heat power of the electrolytic cell based on the convection heat dissipation power, the radiation heat dissipation power and the heat generation power; and determining the set cell front temperature after iteration based on the net heat power of the electrolytic cell, the preset cell end temperature, the correction coefficient, the volume flowrate of the electrolyte, the density of the electrolyte and the specific heat capacity of the electrolyte.

In addition, in this embodiment, the electrolytic cell operating temperature control method based on heat balance further includes: after the electrolytic cell operates for a preset duration, determining an amended correction coefficient based on the actually measured cell front temperature, the actually measured cell end temperature, the net heat power of the electrolytic cell, the volume flowrate of the electrolyte, the density of the electrolyte and the specific heat capacity of the electrolyte; and recalculating the set cell front temperature after iteration based on the amended correction coefficient.

Specifically, during the actual operation, due to the measurement error, it will be found that there is a deviation between the actually measured cell end temperature ($T_{end}$) and the preset cell end temperature ($T_{preset\ end}$), so the correction coefficient $\alpha$ is introduced,

$$T_{preset\ front} = T_{preset\ end} - \triangle t = T_{preset\ end} - \alpha \times W_{net} \div (q_{\ electrolyte}\ \rho_{\ electrolyte}\ c_{\ electrolyte}),$$

the actually measured cell front temperature ($T_{front}$) and the actually measured cell end temperature are substituted into the above formula to obtain

$$T_{front} = T_{end} - \triangle t = T_{end} - \alpha \times W_{net} \div (q_{\ electrolyte}\ \rho_{\ electrolyte}\ c_{\ electrolyte}),$$

thus,

$$\alpha = (T_{\ end} - T_{\ front}) \div W_{net} \times (q_{\ electrolyte}\ \rho_{\ electrolyte}\ c_{\ electrolyte}),$$

after operating for several periods, the correction coefficient $\alpha$ may be averaged, or other methods to reduce the deviation may be adopted to determine the correction coefficient.

It can be seen that $T_{preset\ front}$ is a function of the preset cell end temperature ($T_{preset\ end}$), the voltage V, the current I, the number m of cells, the length L, the diameter D, the cell body surface temperature $T_1$ and the ambient temperature $T_2$ of the electrolytic cell, the volume flowrate $q_{\ electrolyte}$ of the electrolyte, the density $\rho_{\ electrolyte}$ of the electrolyte, the specific heat capacity $c_{\ electrolyte}$ of the electrolyte and the correction coefficient $\alpha$.

To sum up, $T_{preset\ front}$ may vary in real time with the above parameters, and the control unit controls the action of the execution system by comparing the actually measured cell front temperature ($T_{front}$) with the preset cell front temperature ($T_{preset\ front}$), so as to adjust the flowrate of the refrigerant or the temperature, and then the inlet temperature of the electrolyte, thereby realizing the stable control of the electrolytic cell operating temperature.

Particularly, in view of the fluctuation characteristics of the renewable energy source, the apparatus for producing hydrogen and oxygen by water electrolysis may determine the preset cell front temperature ($T_{preset\ front}$) according to the voltage and the current of the electrolytic cell at present and the change of the flowrate $q_{\ electrolyte}$ of the electrolyte, so that an electrolyte inlet temperature of the electrolytic cell is just adaptive to the flowrate of the electrolyte and the heat generation power of the electrolytic cell, thereby realizing the stable operation of the cell end temperature of the electrolytic cell.

In order to facilitate the understanding of the above technical solutions, as an example, the user adopts a parallel electrolytic cell, with a preset cell end temperature ($T_{preset\ end}$) = 90°C, the number m of cells = 56, a diameter D = 0.61m and a length L = 0.71m; the electrolytic cell uses 30% potassium hydroxide solution with $\rho_{\ electrolyte}$ =1.29 kg/L and $c_{electrolyte}$ =3100J/(kg·°C); and the data collection device detects that the voltage is V = 56V, the current is I = 820A, the flowrate of the electrolyte is $q_{\ electrolyte}$ = 0.167L/s, the surface temperatures of the electrolytic cell are $T_{1\ cylinder}$ = 85°C and $T_{1end}$ = 85°C, and the ambient temperature is $T_2$=25°C.

Regarding the side surface of the cylinder of the electrolytic cell:

the qualitative temperature is calculated as $t_{\ cylinder}$=($T_1$+$T_2$)/2=(85+25)/2=55°C, with $\triangle T_{\ cylinder}$= $T_1$-$T_2$=60°C,
the volume expansion coefficient is calculated as $\beta$= 1/(273+t)=1/(273+55)=0.00305,
the Grashof number is calculated as

$$Gr=(\beta gD^3 \triangle T)/\ v^2=(0.00305*9.8*0.61^3*60)/0.000018972=1.13\times10^9,$$

a transition zone is judged and a transition zone formula is adopted,

the convection heat dissipation power of the electrolytic cell relative to the surrounding environment is W cylinder convection $= 3.0372LD^{1.11}(T1-T2)^{1.37}=3.0372*0.71*0.61^{1.11}(85-25)^{1.37}=370(W)$.

Regarding the end surface of the cylinder of the electrolytic cell:

the qualitative temperature is calculated as $t_{end}=(T_1+T_2)/2=(85+25)/2=55°C$ with $\Delta T_{end}= T_1-T_2=60°C$,
the volume expansion coefficient is calculated as $\beta= 1/(273+t)=1/(273+55)=0.00305$,
the Grashof number is calculated as

$$Gr=(\beta gD^3 \triangle T)/ v^2=(0.00305*9.8*0.61^3*60)/0.000018972=1.13\times10^9,$$

a laminar flow zone is judged and a laminar flow zone formula is adopted,
the convection heat dissipation power of the electrolytic cell relative to the surrounding environment is

$$W_{end\ convection}=2.3539LD^{1.75}(T_2-T_1)^{1.25}=2.3539*0.71*0.61^{1.75}(85-25)^{1.37}=192(W)$$

$$W_{convection}=W_{cylinder\ convection}+W_{end\ convection}=370+192=562(W)$$

the radiation heat dissipation power of the electrolytic cell relative to the surrounding environment is

$$W_{radiation}= W_{cylinder\ radiation}+W_{end\ radiation}$$

$$W_{cylinder\ radiation}=15.133*D*L*\{[\ (T_1+273)/100]^4- [(T_2+273)/100]^4\}$$
$$=15.133*0.61*0.71*\{[\ (85+273)/100]^4- [(25+273)/100]^4\}$$
$$=560\ (W)$$

$$W_{end\ radiation}=7.5666\ D^2\{[\ (T_{1\ 端}+273)/100]^4- [(T_2+273)/100]^4\}$$
$$=7.5666*0.61^2*\{[\ (85+273)/100]^4- [(25+273)/100]^4\}$$
$$=240(W)$$

$$W_{radiation}=W_{cylinder\ radiation}+W_{end\ radiation}=560+240=800(W)$$

$$W_{dissipation}=W_{convection}+W_{radiation}=562+800=1362(W)$$

$$W_{generation}= VI-0.74mI$$
$$=56*820-0.74*56*820$$
$$=11939.2\ (W)$$

$$W_{net} = W_{generation} - W_{dissipation}$$

$$= 11939.2 - 1362$$

$$= 10577.2(W)$$

Before the system amends the correction coefficient $\alpha$, the correction coefficient $\alpha$ is valued as 1,

$$T_{preset\ front} = T_{preset\ end} - \triangle t = T_{preset\ end} - \alpha \times W_{net} \div (q_{electrolyte}\ \rho_{electrolyte}\ c_{electrolyte})$$

$$= 90 - 1 \times 10577.2 \div 1 \times (0.167 * 1.29 * 3100)$$

$$= 74.2(°C),$$

When the electrolytic apparatus is just started up, the control unit collects the cell front temperature $T_{front}$ at a cell front temperature monitoring point through the temperature collection device. At this time, $T_{front} < T_{preset\ front}$, and the refrigerant flow controller is closed.

With the elapse of the operation time, the actually measured cell front temperature $T_{front}$ and the actually measured cell end temperature $T_{end}$ both gradually increases. The control system controls the refrigerant flow controller to start cooling the circulating electrolyte, and meanwhile, the timer in the control logic starts counting. In a timing period, $T_{preset\ front} = 74.2°C$ remains unchanged, and the control system controls the opening degree of the refrigerant flow controller by comparing $T_{front}$ and $T_{preset\ front}$, and then adjusts $T_{front}$ to be converged gradually towards $T_{preset\ front}$.

At the beginning of the next period, the cell end temperature set by the user is $T_{preset\ end} = 90°C$.

The real-time data monitored by the system is as follows:
the data collection device detects that the voltage is V = 50.4 V, the current is I = 410A, the flowrate of the electrolyte is $q_{electrolyte}$ = 0.167 L/s, the surface temperatures of the electrolytic cell are $T_{1\ cylinder}$ = 85°C and $T_{1end}$ = 85°C, the ambient temperature is $T_2 = 25°C$, and $T_{front}$ is 74.2°C.

Regarding the side surface of the cylinder of the electrolytic cell:

the qualitative temperature is calculated as $t_{cylinder} = (T_1 + T_2)/2 = (85+25)/2 = 55°C$, with $\Delta T_{cylinder} = T_1 - T_2 = 60°C$,
the volume expansion coefficient is calculated as $\beta = 1/(273+t) = 1/(273+55) = 0.00305$,
the Grashof number is calculated as,

$$Gr = (\beta g D^3 \triangle T)/\ v^2 = (0.00305 * 9.8 * 0.61^3 * 60)/0.000018972 = 1.13 \times 10^9,$$

a transition zone is judged and a transition zone formula is adopted,
the convection heat dissipation power of the electrolytic cell relative to the surrounding environment is

$$W_{cylinder\ convection} = 3.0372 LD^{1.11}(T1-T2)^{1.37} = 3.0372 * 0.71 * 0.61^{1.11}(85-25)^{1.37} = 370(W)$$

Regarding the end surface of the cylinder of the electrolytic cell:

the qualitative temperature is calculated as $t_{end} = (T_1 + T_2)/2 = (85+25)/2 = 55°C$, with $\Delta T_{end} = T_1 - T_2 = 60°C$,
the volume expansion coefficient is calculated as $\beta = 1/(273+t) = 1/(273+55) = 0.00305$,
the Grashof number is calculated as,

$$Gr = (\beta g D^3 \triangle T)/\ v^2 = (0.00305 * 9.8 * 0.61^3 * 60)/0.000018972 = 1.13 \times 10^9,$$

a laminar zone is judged and a laminar zone formula is adopted,
the convection heat dissipation power of the electrolytic cell relative to the surrounding environment is

$$W_{\text{end convection}} = 2.3539LD^{1.75}(T_2-T_1)^{1.25} = 2.3539*0.71*0.61^{1.75}(85-25)^{1.37} = 192(W)$$

$$W_{\text{convection}} = W_{\text{cylinder convection}} + W_{\text{end convection}} = 370+192 = 562(W)$$

the radiation heat dissipation power of the electrolytic cell relative to the surrounding environment is

$$W_{\text{radiation}} = W_{\text{cylinder radiation}} + W_{\text{end radiation}}$$

$$W_{\text{cylinder radiation}} = 15.133*D*L*\{[(T_1+273)/100]^4 - [(T_2+273)/100]^4\}$$
$$= 15.133*0.61*0.71*\{[(85+273)/100]^4 - [(25+273)/100]^4\}$$
$$= 560 \ (W)$$

$$W_{\text{end radiation}} = 7.5666 \ D^2\{[(T_{1\,端}+273)/100]^4 - [(T_2+273)/100]^4\}$$

$$= 7.5666*0.61^2*\{[(85+273)/100]^4 - [(25+273)/100]^4\}$$
$$= 240(W)$$

$$W_{\text{radiation}} = W_{\text{cylinder radiation}} + W_{\text{end radiation}} = 560+240 = 800(W)$$

$$W_{\text{dissipation}} = W_{\text{convection}} + W_{\text{radiation}} = 562 + 800 = 1362(W)$$

$$W_{\text{generation}} = VI-0.74mI$$
$$= 50.4*410-0.74*50.4*410$$
$$= 5372.6(W)$$

$$W_{\text{net}} = W_{\text{generation}} - W_{\text{dissipation}}$$
$$= 5372.6 - 1362$$
$$= 4010.6(W)$$

Before the system amends the correction coefficient $\alpha$, the correction coefficient $\alpha$ is valued as 1,

$$T_{\text{preset front}} = T_{\text{preset end}} - \triangle t = T_{\text{preset end}} - \alpha \times W_{\text{net}} \div (q_{\text{electrolyte}} \, \rho_{\text{electrolyte}} \, c_{\text{electrolyte}})$$

$$= 90 - 1 \times 4010.6 \div (0.167 * 1.29 * 3100)$$

$$= 84 (°C)$$

At this time, the set value $T_{\text{preset front}}$ of the cell front temperature is changed from 74.2°C to 84°C, and $T_{\text{front}}$ is 74.2°C; the control unit compares $T_{\text{front}}$ and $T_{\text{preset front}}$, thereby decreasing the opening degree of the cooling water valve, so that the cell front temperature is gradually converted towards 84°C.

In case of the conventional temperature control method, the set value of the cell front temperature remains unchanged, and when the load of the electrolytic cell decreases, the cell front temperature remains unchanged and the cell end temperature decreases. At this time, compared with the present disclosure, the difference in the temperature of the electrolytic cell is 9.8 °C, the difference in the cell voltage is about 49 mV according to experience, and the difference in the unit energy consumption of hydrogen is 0.117kWh / $Nm^3H_2$, thereby achieving obvious energy saving and consumption reduction.

When the system operates stably, the correction coefficient $\alpha$ can be amended.

In the described above, $T_{\text{preset end}}$=90°C, but after a period of actual operation, before $T_{\text{front}}$=74.2°C and $T_{\text{end}}$=92°C.

It is calculated that

$$\alpha = (T_{\text{end}} - T_{\text{front}}) \div [W_{\text{net}} \div (q_{\text{electrolyte}} \, \rho_{\text{electrolyte}} \, c_{\text{electrolyte}})]$$

$$= (92 - 74.2) \div [10577.2 \div (0.167 * 1.29 * 3100)]$$

$$= 18.5 \div 16.5$$

$$= 1.124$$

The value of $\alpha$ may be calculated after several periods, and the average value of $\alpha$ is calculated as 1.124, which is substituted into the formula of $T_{\text{preset front}}$

$$T_{\text{preset front}} = T_{\text{preset end}} - \triangle t = T_{\text{preset end}} - \alpha \times W_{\text{net}} \div (q_{\text{electrolyte}} \, \rho_{\text{electrolyte}} \, c_{\text{electrolyte}})$$

$$= 90 - 1.124 \times 10577.2 \div (0.167 * 1.29 * 3100)$$

$$= 72.2°C$$

A temperature drop is 2 °C compared with 74.2°C before correction. At this time, the cell front temperature is gradually converged towards 72.2°C, and the cell end temperature is also gradually decreased and converged towards 90°C, so that the cell temperature control is more accurate.

As can be seen from the above technical solutions, the electrolytic cell operating temperature control method based on heat balance according to the above embodiments of the present disclosure can improve the control precision and sensitivity of the electrolytic cell operating temperature, avoid a large fluctuation of the electrolytic cell temperature, and improve the safety and stability of the operation of the electrolytic cell. By ensuring the relative stability of the electrolytic cell temperature, the operating temperature of the electrolytic cell can be appropriately increased, and then the energy consumption in the electrolysis process can be reduced. Further, it is possible to better adapt to the wide fluctuation of the input power of the electrolytic cell, which is more advantageous than the conventional electrolytic cell temperature control method, and the hydrogen production system by water electrolysis achieves better cell temperature stability and lower energy consumption. In addition, being different from the passive control of the cell temperature of the electrolytic cell at present, where the system issues an instruction of adjusting the cell temperature only after the cell temperature has been changed, the technical solutions in the above embodiments of the present disclosure are under an active control, where although the cell temperature does not change immediately when the operating parameters of the electrolytic cell and the surrounding environment have been changed, the electrolyte supply temperature can be changed in advance based on theoretical calculation, so that the cell temperature of the electrolytic cell operates smoothly.

The embodiments of the present disclosure further provide an electrolytic cell operating temperature control system based on heat balance , which includes: a temperature collection device configured to collect an actual cell front temperature of an electrolytic cell; a control unit configured to acquire the actual cell front temperature, and control a refrigerant flow controller to control an inlet temperature of an electrolyte when the actual cell front temperature deviates from a preset cell front temperature, wherein the preset cell front temperature is determined based on a preset cell end temperature, a correction coefficient, net heat power of the electrolytic cell, a volume flowrate of the electrolyte, a density of the electrolyte and a specific heat capacity of the electrolyte; within a current iteration period, determine an opening degree of the refrigerant flow controller based on the actual cell front temperature and the preset cell front temperature; and at the beginning of a subsequent iteration period of the current iteration period, determine a set cell front temperature after iteration based on the preset cell end temperature, the correction coefficient, size information of the electrolytic cell, an actually measured voltage, an actually measured current, an actually measured surface temperature of the electrolytic cell, an actually measured ambient temperature, the volume flowrate of the electrolyte, the density of the electrolyte and the specific heat capacity of the electrolyte, and adjust the opening degree of the refrigerant flow controller based on the set cell front temperature after iteration.

In some embodiments of the present disclosure, the preset cell front temperature is determined by a formula:

$$T_{\text{preset front}} = T_{\text{preset end}} - \triangle t = T_{\text{preset end}} - \alpha \times W_{\text{net}} \div (q_{\text{electrolyte}} \, \rho_{\text{electrolyte}} \, c_{\text{electrolyte}}),$$

where $T_{\text{preset front}}$ is a preset cell front temperature; $T_{\text{preset end}}$ is a preset cell end temperature; $\Delta t$ is an inlet-outlet temperature rise of the electrolytic cell; $\alpha$ is a correction coefficient; $W_{\text{net}}$ is net heat power of the electrolytic cell; $q_{\text{electrolyte}}$ is a volume flowrate of the electrolyte; $\rho_{\text{electrolyte}}$ is a density of the electrolyte; and $c_{\text{electrolyte}}$ is a specific heat capacity of the electrolyte.

In some embodiments of the present disclosure, a calculation formula of the net heat power of the electrolytic cell is:

$$W_{\text{net}} = W_{\text{generation}} - W_{\text{dissipation}},$$

$$W_{\text{generation}} = \sum_{m=1}^{m}(V_m - V_n) \times I_m$$

where $W_{\text{net}}$ is net heat power of the electrolytic cell; $W_{\text{generation}}$ is heat generation power of the electrolytic cell; $W_{\text{dissipation}}$ is heat dissipation power of the electrolytic cell; $V_m$ is a cell voltage of a m-th cell of the electrolytic cell; $V_n$ is a thermal neutral voltage of water in a working state; $I_m$ is a cell current of the m-th cell of the electrolytic cell; and m is the number of cells in the electrolytic cell.

In this embodiment, when the heat generation power of the electrolytic cell is to be calculated, since the electrolytic cell is classified into a parallel electrolytic cell and a series electrolytic cell, the corresponding methods should be adopted for calculation respectively. Specifically, the cell voltage of the series electrolytic cell may be simplified as a value obtained by dividing a total voltage with the number of cells, and the cell current thereof is equal to a total current; the cell voltage of the parallel electrolytic cell is simplified as a value obtained by dividing the total voltage with the number of cells multiplied by 2, and the cell current thereof is simplified as a value obtained by dividing the total current with 2; and the thermal neutral voltage is valued as 1.48,

if the electrolytic cell is a series electrolytic cell, $W_{\text{generation}}$ is denoted as $W_{\text{generation-series}}$, and specifically:

$$W_{\text{generation-series}} = (V_{\text{cell}} - 1.48) \times I_{\text{cell}} \times m = (V \div m - 1.48) \times I \times m = VI - 1.48mI,$$

if the electrolytic cell is a parallel electrolytic cell, $W_{\text{generation}}$ is denoted as $W_{\text{generation-parallel}}$, and specifically:

$$W_{\text{generation-parallel}} = (V_{\text{cell}} - 1.48) \times I_{\text{cell}} \times m = (V \div m \times 2 - 1.48) \times I \div 2 \times m = VI - 0.74mI,$$

where V is a total voltage of the electrolytic cell, I is a total current of the electrolytic cell, $V_{\text{cell}}$ is an average cell voltage of the electrolytic cell, and $I_{\text{cell}}$ is an average cell current of the electrolytic cell.

In some embodiments of the present disclosure, the heat dissipation power of the electrolytic cell is a sum of convection heat dissipation power of the electrolytic cell relative to the surrounding environment and radiation heat dissipation power of the electrolytic cell relative to the surrounding environment, and specifically:

$$W_{\text{dissipation}} = W_{\text{convection}} + W_{\text{radiation}},$$

where $W_{\text{convection}}$ is convection heat dissipation power of the electrolytic cell relative to the surrounding environment; $W_{\text{radiation}}$ is radiation heat dissipation power of the electrolytic cell relative to the surrounding environment;

$$W_{\text{convection}} = W_{\text{cylinder convection}} + W_{\text{end convection}}$$

where $W_{\text{cylinder convection}}$ is convection heat dissipation power of a side surface of a cylinder of the electrolytic cell relative to the surrounding environment;

$W_{\text{end convection}}$ is convection heat dissipation power of both end surfaces of the cylinder of the electrolytic cell relative to the surrounding environment;

$W_{\text{cylinder convection}} = h_{\text{cylinder}} * A_{\text{cylinder}} * \Delta T_{\text{cylinder}}$, where $\Delta T_{\text{cylinder}}$ is a difference between a temperature of the side surface of the cylinder of a cell body of the electrolytic cell and the ambient temperature, i.e.,

a)

$$T_{\text{cylinder}} = T_{1\text{cylinder}} - T_2,$$

$T_{1\text{cylinder}}$ is a temperature of the side surface of the cylinder of the cell body, and $T_2$ is an ambient temperature; $A_{\text{cylinder}}$ is a heat dissipation area of the side surface of the cylinder of the electrolytic cell, where the cylinder has a diameter D and a length L, so that $A_{\text{cylinder}} = \pi * D * L$; $h_{\text{cylinder}}$ is a heat dissipation coefficient of the side surface of the cylinder, and $h_{\text{cylinder}} = Nu * \lambda / D$, where $\lambda$ is a thermal conductivity of air; Nu is a Nusselt number, and $Nu = C*(Gr*Pr)^n$, where Pr is a Planck constant, Gr is a Grashof number and $Gr = (\beta g D^3 \Delta T)/v^2$, n is an exponent of a Nusselt number equation, and the values of C and n are both determined based on the value of Gr, where a volume expansion coefficient $\beta = 1/(273+t)$, t is a qualitative temperature and $t = (T_{1\text{cylinder}} + T_2)/2$, and v is an air viscosity.

In another embodiment, the values of C and n are both determined based on the value of Gr, and specifically, if the Grashof number is calculated to be between $10^4$ and $5.76 \times 10^8$, the convection heat dissipation of the side surface of the cylinder of the electrolytic cell body is laminar, where C is 0.48 and n is 0.25; if the Grashof number is calculated to be between $5.76 \times 10^8$ and $4.65 \times 10^9$, the convection heat dissipation of the side surface of the cylinder of the electrolytic cell is in a transition zone, where C is 0.0445 and n is 0.37; and if the Grashof number is calculated to be greater than $4.65 \times 10^9$, the convection heat dissipation of the side surface of the cylinder of the electrolytic cell is turbulent, where C is 0.1 and n is 1/3.

The convection heat dissipation of the end surface of the electrolytic cell is:

$$W_{\text{end convection}} = h_{\text{end}} * A_{\text{end}} * \triangle T_{\text{end}},$$

where $\Delta T_{\text{end}}$ is a difference between a temperature of the end surface of the cell body of the electrolytic cell and the ambient temperature, i.e.,

b)

$$T_{\text{end}} = T_{1\text{ end}} - T_2,$$

$T_{1\text{end}}$ is a temperature of the end surface of the cell body, and $T_2$ is an ambient temperature;

$A_{\text{end}}$ is a heat dissipation area of the end surface of the cylinder of the electrolytic cell, where the end surface of the cylinder has a diameter D, so that $A_{\text{end}} = 2 \times 1/4 \pi * D^2 = 0.5 \pi * D^2$; $h_{\text{end}}$ is a heat dissipation coefficient of the end surface of the cylinder, and $h_{\text{end}} = Nu * \lambda / D$, where $\lambda$ is a thermal conductivity of air; Nu is a Nusselt number, and $Nu = C*(Gr*Pr)^n$, where Pr is a Planck constant, Gr is a Grashof number and $Gr = (\beta g D^3 \Delta T)/v^2$, n is an exponent of a Nusselt number equation, and the values of C and n are both determined based on the value of Gr, where a volume expansion

coefficient $\beta = 1/(273+t)$, t is a qualitative temperature and $t = (T_{1end}+T_2)/2$, and v is an air viscosity.

In another embodiment, the values of C and n are both determined based on the value of Gr, and specifically, if the Grashof number is calculated to be between $10^4$ and $3 \times 10^9$, the convection heat dissipation of both end surfaces of the cylinder of the electrolytic cell is laminar, where C is 0.59 and n is 0.25; if the Grashof number is calculated to be between $3 \times 10^9$ and $2 \times 10^{10}$, the convection heat dissipation of the end surfaces of the cylinder of the electrolytic cell is in a transition zone, where C is 0.0292 and n is 0.39; and if the Grashof number is calculated to be greater than $2 \times 10^{10}$, the convection heat dissipation of the end surfaces of the cylinder of the electrolytic cell is turbulent, where C is 0.11 and n is 1/3.

The calculation formula of the radiation heat dissipation power of the electrolytic cell relative to the surrounding environment is as follows:

$$W_{radiation} = W_{end\ radiation} + W_{cylinder\ radiation}$$

$$W_{end\ radiation} = A_{end} * \varepsilon * \sigma * \{[(T_{1end}+273)/100]^4 - [(T_2+273)/100]^4\},$$

$$W_{cylinder\ radiation} = A_{cylinder} * \varepsilon * \sigma * \{[(T_{1cylinder}+273)/100]^4 - [(T_2+273)/100]^4\},$$

where $\varepsilon$ is a blackness and valued according to material characteristics of the surface of the electrolytic cell; and $\sigma$ is a blackbody radiation coefficient and valued as $5.67 W/(m^2 \cdot K^4)$.

In some embodiments of the present disclosure, the determining a set cell front temperature after iteration based on the preset cell end temperature, the correction coefficient, size information of the electrolytic cell, an actually measured voltage, an actually measured current, an actually measured surface temperature of the electrolytic cell, an actually measured ambient temperature, the volume flowrate of the electrolyte, the density of the electrolyte and the specific heat capacity of the electrolyte specifically includes:
determining a qualitative temperature and a difference between the cell body surface temperature of the electrolytic cell and the ambient temperature based on the actually measured surface temperature of the electrolytic cell and the actually measured ambient temperature, and determining a volume expansion coefficient; determining the Grashof number based on the volume expansion coefficient, the difference between the cell body surface temperature and the ambient temperature, the gravity acceleration, the size information of the electrolytic cell and the air viscosity; determining a constant C and an exponent n of a Nusselt equation according to the Grashof number, and determining convection heat dissipation power of the electrolytic cell relative to the surrounding environment in conjunction with the Planck constant; determining radiation heat dissipation power of the electrolytic cell relative to the surrounding environment in conjunction with a surface blackness, an area, a blackbody radiation constant, the surface temperature of the electrolytic cell and the ambient temperature; determining net heat power of the electrolytic cell based on the convection heat dissipation power, the radiation heat dissipation power and the heat generation power; and determining the set cell front temperature after iteration based on the net heat power of the electrolytic cell, the preset cell end temperature, the correction coefficient, the volume flowrate of the electrolyte, the density of the electrolyte and the specific heat capacity of the electrolyte.

In some embodiments of the present disclosure, after the electrolytic cell operates for a preset duration, an amended correction coefficient is determined based on the actually measured cell front temperature, the actually measured cell end temperature, the net heat power of the electrolytic cell, the volume flowrate of the electrolyte, the density of the electrolyte and the specific heat capacity of the electrolyte; and the set cell front temperature after iteration is recalculated based on the amended correction coefficient.

Those described above are only exemplary embodiments of the present disclosure, and are not intended to limit the present disclosure. The protection scope of the present disclosure is defined by the claims. Persons skilled in the art can make various modifications or equivalent substitutions within the spirit and protection scope of the present disclosure, and such modifications or equivalent substitutions should also be regarded as falling within the protection scope of the present disclosure.

**Claims**

1.  An electrolytic cell operating temperature control method based on heat balance, comprising:

    acquiring an actual cell front temperature of an electrolytic cell that is collected by a temperature collection device;

if the actual cell front temperature deviates from a preset cell front temperature, controlling a refrigerant flow controller to control an inlet temperature of an electrolyte, wherein the preset cell front temperature is determined based on a preset cell end temperature, a correction coefficient, net heat power of the electrolytic cell, a volume flowrate of the electrolyte, a density of the electrolyte and a specific heat capacity of the electrolyte;

within a current iteration period, determining an opening degree of the refrigerant flow controller based on the actual cell front temperature and the preset cell front temperature; and

at the beginning of a subsequent iteration period of the current iteration period, determining a set cell front temperature after iteration based on the preset cell end temperature, the correction coefficient, size information of the electrolytic cell, an actually measured voltage, an actually measured current, an actually measured surface temperature of the electrolytic cell, an actually measured ambient temperature, the volume flowrate of the electrolyte, the density of the electrolyte and the specific heat capacity of the electrolyte, and adjusting the opening degree of the refrigerant flow controller based on the set cell front temperature after iteration.

2. The electrolytic cell operating temperature control method based on heat balance according to claim **1,** wherein the preset cell front temperature is determined by a formula:

$$T_{\text{preset front}} = T_{\text{preset end}} - \triangle t = T_{\text{preset end}} - \alpha \times W_{\text{net}} \div (q_{\text{electrolyte}}\, \rho_{\text{electrolyte}}\, c_{\text{electrolyte}}),$$

where $T_{\text{preset front}}$ is a preset cell front temperature; $T_{\text{preset end}}$ is a preset cell end temperature; $\Delta t$ is an inlet-outlet temperature rise of the electrolytic cell; $\alpha$ is a correction coefficient; $W_{\text{net}}$ is net heat power of the electrolytic cell; $q_{\text{electrolyte}}$ is a volume flowrate of the electrolyte; $\rho_{\text{electrolyte}}$ is a density of the electrolyte; and $c_{\text{electrolyte}}$ is a specific heat capacity of the electrolyte.

3. The electrolytic cell operating temperature control method based on heat balance according to claim 2, wherein a formula of the net heat power of the electrolytic cell is:

$$W_{\text{net}} = W_{\text{generation}} - W_{\text{dissipation}},$$

$$W_{\text{generation}} = \sum_{m=1}^{m} (V_m - V_n) \times I_m$$

where $W_{\text{net}}$ is net heat power of the electrolytic cell; $W_{\text{generation}}$ is heat generation power of the electrolytic cell; $W_{\text{dissipation}}$ is heat dissipation power of the electrolytic cell; $V_m$ is a cell voltage of a m-th cell of the electrolytic cell; $V_n$ is a thermal neutral voltage of water in a working state; $I_m$ is a cell current of the m-th cell of the electrolytic cell; and m is the number of cells in the electrolytic cell;

in order to simplify the calculation, the cell voltage $V_m$ may be replaced with an average cell voltage $V_{\text{cell}}$, $V_n$ is valued as 1.48, and the formula is simplified as:

$$W_{\text{generation}} = (V_{\text{cell}} - 1.48) \times I_{\text{cell}} \times m,$$

$V_{\text{cell}}$ is an average cell voltage of the electrolytic cell; and $I_{\text{cell}}$ is an average cell current of the electrolytic cell.

4. The electrolytic cell operating temperature control method based on heat balance according to claim 3, wherein when the heat generation power of the electrolytic cell is to be calculated,

if the electrolytic cell is a series electrolytic cell, $W_{\text{generation}}$ is denoted as $W_{\text{generation-series}}$, and specifically:

$$W_{\text{generation-series}} = (V_{\text{cell}} - 1.48) \times I_{\text{cell}} \times m = (V \div m - 1.48) \times I \times m = VI - 1.48mI,$$

if the electrolytic cell is a parallel electrolytic cell, $W_{\text{generation}}$ is denoted as $W_{\text{generation-parallel}}$, and specifically:

$$W_{\text{generation-parallel}} = (V_{\text{cell}} - 1.48) \times I_{\text{cell}} \times m = (V \div m \times 2 - 1.48) \times I \div 2 \times m = VI - 0.74mI,$$

where V is a total voltage of the electrolytic cell, and I is a total current of the electrolytic cell.

5. The electrolytic cell operating temperature control method based on heat balance according to claim 4, wherein the heat dissipation power of the electrolytic cell is a sum of convection heat dissipation power of the electrolytic cell relative to a surrounding environment and radiation heat dissipation power of the electrolytic cell relative to the surrounding environment, and specifically:

$$W_{\text{dissipation}} = W_{\text{convection}} + W_{\text{radiation}},$$

where $W_{\text{convection}}$ is convection heat dissipation power of the electrolytic cell relative to the surrounding environment;

$W_{\text{radiation}}$ is radiation heat dissipation power of the electrolytic cell relative to the surrounding environment;

$$W_{\text{convection}} = W_{\text{cylinder convection}} + W_{\text{end convection}}$$

where $W_{\text{cylinder convection}}$ is convection heat dissipation power of a side surface of a cylinder of the electrolytic cell relative to the surrounding environment, and $W_{\text{end convection}}$ is convection heat dissipation power of both end surfaces of the cylinder of the electrolytic cell relative to the surrounding environment;

$W_{\text{cylinder convection}} = h_{\text{cylinder}} * A_{\text{cylinder}} * \Delta T_{\text{cylinder}}$, where $\Delta T_{\text{cylinder}}$ is a difference between a temperature of the side surface of the cylinder of a cell body of the electrolytic cell and the ambient temperature, i.e.,

$$\triangle T_{\text{cylinder}} = T_{1\text{cylinder}} - T_2,$$

$T_{1\text{cylinder}}$ is a temperature of the side surface of the cylinder of the cell body, and $T_2$ is an ambient temperature; $A_{\text{cylinder}}$ is a heat dissipation area of the side surface of the cylinder of the electrolytic cell, where the cylinder has a diameter D and a length L, so that $A_{\text{cylinder}} = \pi * D * L$; $h_{\text{cylinder}}$ is a heat dissipation coefficient of the side surface of the cylinder, and $h_{\text{cylinder}} = Nu * \lambda / D$, where $\lambda$ is a thermal conductivity of air; Nu is a Nusselt number, and $Nu = C * (Gr * Pr)''$, where Pr is a Planck constant, Gr is a Grashof number and $Gr = (\beta g D^3 \Delta T) / v^2$, n is an exponent of a Nusselt number equation, and the values of C and n are both determined based on the value of Gr, where a volume expansion coefficient $\beta = 1/(273+t)$, t is a qualitative temperature and $t = (T_{1\text{cylinder}} + T_2)/2$, and v is an air viscosity.

6. The electrolytic cell operating temperature control method based on heat balance according to claim 5, wherein the values of C and n are both determined based on the value of Gr, and specifically,

if the Grashof number is calculated to be between $10^4$ and $5.76 \times 10^8$, the convection heat dissipation of the side surface of the cylinder of the electrolytic cell is laminar, where C is 0.48 and n is 0.25;

if the Grashof number is calculated to be between $5.76 \times 10^8$ and $4.65 \times 10^9$, the convection heat dissipation of the side surface of the cylinder of the electrolytic cell is in a transition zone, where C is 0.0445 and n is 0.37; and

if the Grashof number is calculated to be greater than $4.65 \times 10^9$, the convection heat dissipation of the side surface of the cylinder of the electrolytic cell is turbulent, where C is 0.1 and n is 1/3.

7. The electrolytic cell operating temperature control method based on heat balance according to claim 5, wherein the convection heat dissipation power of the electrolytic cell is a sum of the convection heat dissipation power of the end surface of the electrolytic cell and the convection heat dissipation power of the side surface of the cylinder of the electrolytic cell relative to the surrounding environment, and specifically:

$$W_{\text{convection}} = W_{\text{end convection}} + W_{\text{cylinder convection}},$$

$$W_{\text{end convection}} = h_{\text{end}} * A_{\text{end}} * \triangle T_{\text{end}},$$

where $\Delta T_{\text{end}}$ is a difference between a temperature of the end surface of the cell body of the electrolytic cell and the ambient temperature, i.e.,

$$\triangle T_{end} = T_{1\,end} - T_2,$$

$T_{1end}$ is a temperature of the end surfaces of the cell body, and $T_2$ is an ambient temperature; $A_{end}$ is a heat dissipation area of the end surface of the cylinder of the electrolytic cell, the end surface of the cylinder has a diameter D, $A_{end} = 2 \times 1/4\pi*D^2 = 0.5\pi*D^2$; $h_{end}$ is a heat dissipation coefficient of the end surface of the cylinder, and $h_{end} = Nu*\lambda/D$, where $\lambda$ is a thermal conductivity of air; Nu is a Nusselt number, and $Nu = C*(Gr*Pr)^n$, where Pr is a Planck constant, Gr is a Grashof number and $Gr = (\beta g D^3 \Delta T)/v^2$, n is an exponent of a Nusselt number equation, and the values of C and n are both determined based on the value of Gr, where a volume expansion coefficient $\beta = 1/(273+t)$, t is a qualitative temperature and $t = (T_{1end}+T_2)/2$, and v is an air viscosity.

8. The electrolytic cell operating temperature control method based on heat balance according to claim 7, wherein the values of C and n are both determined based on the value of Gr, and specifically,

if the Grashof number is calculated to be between $10^4$ and $3 \times 10^9$, the convection heat dissipation of both end surfaces of the cylinder of the electrolytic cell is laminar, where C is 0.59 and n is 0.25;
if the Grashof number is calculated to be between $3 \times 10^9$ and $2 \times 10^{10}$, the convection heat dissipation of both end surfaces of the cylinder of the electrolytic cell is in a transition zone, where C is 0.0292 and n is 0.39; and
if the Grashof number is calculated to be greater than $2 \times 10^{10}$, the convection heat dissipation of both end surfaces of the cylinder of the electrolytic cell is turbulent, where C is 0.11 and n is 1/3.

9. The electrolytic cell operating temperature control method based on heat balance according to claim 5, wherein a formula of the radiation heat dissipation power of the electrolytic cell relative to the surrounding environment is:

$$W_{radiation} = W_{end\,radiation} + W_{cylinder\,radiation}$$

$$W_{end\,radiation} = A_{end}*\varepsilon*\sigma*\{[(T_{1\,end}+273)/100]^4 - [(T_2+273)/100]^4\},$$

$$W_{cylinder\,radiation} = A_{cylinder}*\varepsilon*\sigma*\{[(T_{1\,cylinder}+273)/100]^4 - [(T_2+273)/100]^4\},$$

where $\varepsilon$ is a blackness and valued according to material characteristics of the surface of the electrolytic cell; and $\sigma$ is a blackbody radiation coefficient and valued as $5.67 W/(m^2 \cdot K^4)$.

10. The electrolytic cell operating temperature control method based on heat balance according to claim 7, wherein the determining a set cell front temperature after iteration based on the preset cell end temperature, the correction coefficient, size information of the electrolytic cell, an actually measured voltage, an actually measured current, an actually measured surface temperature of the electrolytic cell, an actually measured ambient temperature, the volume flowrate of the electrolyte, the density of the electrolyte and the specific heat capacity of the electrolyte comprises:

determining a qualitative temperature and a difference between the cell body surface temperature of the electrolytic cell and the ambient temperature based on the actually measured surface temperature of the electrolytic cell and the actually measured ambient temperature, and determining a volume expansion coefficient;
determining the Grashof number based on the volume expansion coefficient, the difference between the cell body surface temperature and the ambient temperature, the gravity acceleration, the size information of the electrolytic cell and the air viscosity;
determining a constant C and an exponent n of a Nusselt equation according to the Grashof number, and determining convection heat dissipation power of the electrolytic cell relative to the surrounding environment in conjunction with the Planck constant; and determining radiation heat dissipation power of the electrolytic cell relative to the surrounding environment in conjunction with a surface blackness, an area, a blackbody radiation constant, the surface temperature of the electrolytic cell and the ambient temperature;
determining net heat power of the electrolytic cell based on the convection heat dissipation power, the radiation heat dissipation power and the heat generation power; and
determining the set cell front temperature after iteration based on the net heat power of the electrolytic cell, the preset cell end temperature, the correction coefficient, the volume flowrate of the electrolyte, the density of the electrolyte and the specific heat capacity of the electrolyte.

**11.** The electrolytic cell operating temperature control method based on heat balance according to claim 10, further comprising:

after the electrolytic cell operates for a preset duration, determining an amended correction coefficient based on the actually measured cell front temperature, the actually measured cell end temperature, the net heat power of the electrolytic cell, the volume flowrate of the electrolyte, the density of the electrolyte and the specific heat capacity of the electrolyte; and
recalculating the set cell front temperature after iteration based on the amended correction coefficient.

**12.** An electrolytic cell operating temperature control system based on heat balance, comprising:

a temperature collection device configured to collect an actual cell front temperature of an electrolytic cell; and
a control unit configured to acquire the actual cell front temperature, and control a refrigerant flow controller to control an inlet temperature of an electrolyte when the actual cell front temperature deviates from a preset cell front temperature, in which the preset cell front temperature is determined based on a preset cell end temperature, a correction coefficient, net heat power of the electrolytic cell, a volume flowrate of the electrolyte, a density of the electrolyte and a specific heat capacity of the electrolyte; within a current iteration period, determine an opening degree of the refrigerant flow controller based on the actual cell front temperature and the preset cell front temperature; and at the beginning of a subsequent iteration period of the current iteration period, determine a set cell front temperature after iteration based on the preset cell end temperature, the correction coefficient, size information of the electrolytic cell, an actually measured voltage, an actually measured current, an actually measured surface temperature of the electrolytic cell, an actually measured ambient temperature, the volume flowrate of the electrolyte, the density of the electrolyte and the specific heat capacity of the electrolyte, and adjust the opening degree of the refrigerant flow controller based on the set cell front temperature after iteration;
the preset cell front temperature is determined by a formula:

$$T_{preset\ front} = T_{preset\ end} - \triangle t = T_{preset\ end} - \alpha \times W_{net} \div (q_{electrolyte}\ \rho_{electrolyte}\ c_{electrolyte}),$$

where $T_{preset\ front}$ is a preset cell front temperature; $T_{preset\ end}$ is a preset cell end temperature; $\Delta t$ is an inlet-outlet temperature rise of the electrolytic cell; $\alpha$ is a correction coefficient; $W_{net}$ is net heat power of the electrolytic cell; $q_{electrolyte}$ is a volume flowrate of the electrolyte; $\rho_{electrolyte}$ is a density of the electrolyte; and $c_{electrolyte}$ is a specific heat capacity of the electrolyte.

FIG.1

EP 4 549 630 A1

FIG.2

Hydrogen separator

Surface temperature monitoring point of hydrogen separator

Hydrogen outlet temperature monitoring point

Oxygen outlet temperature monitoring point

Surface temperature monitoring point of oxygen separator

Oxygen separator

D Hydrogen separation

L Hydrogen separation

D Oxygen separation

L Oxygen separation

Refrigerant outlet temperature monitoring point

Heat exchanger

Surface temperature monitoring point of heat exchanger

D Heat exchange

Refrigerant inlet flowrate monitoring point

L Heat exchange

Cell rear temperature monitoring point of electrolytic cell

Raw water inlet temperature monitoring point

Raw water inlet flowrate monitoring point

Ambient temperature monitoring point

Refrigerant flowrate adjustment device

FIS 1001

F

Electrolytic cell

Refrigerant inlet temperature monitoring point

FIS 1001

F

Electrolyte flowrate monitoring point

FIS 1001

F

D Cell

Surface temperature monitoring point of electrolytic cell

1 2 3 4

Cell front temperature monitoring point of electrolyte

V

Total voltage monitoring point of electrolytic cell

A

Total current monitoring point of electrolytic cell

L Cell

## INTERNATIONAL SEARCH REPORT

| International application No. |
| --- |
| **PCT/CN2023/103189** |

**A. CLASSIFICATION OF SUBJECT MATTER**

C25B15/021(2021.01)i; C25B15/027(2021.01)i; C25B1/04(2021.01)i

According to International Patent Classification (IPC) or to both national classification and IPC

**B. FIELDS SEARCHED**

Minimum documentation searched (classification system followed by classification symbols)

IPC: C25B

Documentation searched other than minimum documentation to the extent that such documents are included in the fields searched

Electronic data base consulted during the international search (name of data base and, where practicable, search terms used)

CNTXT, ENTXTC, ENTXT, VEN, CJFD, CNKI, IEEE: 电解槽, 制氢, 槽前温, 槽后温, 出口, 入口, 温度, 控制, 热平衡, 衡算, 计算, electrolytic cell, hydrogen, product+, generat+, groove, inlet, outlet, temperature, control+, adjust+, heat, balance, calculat+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114967782 A (718TH RESEARCH INSTITUTE OF CHINA SHIPBUILDING INDUSTRY CORP.) 30 August 2022 (2022-08-30) description, paragraphs 95-374, and figures 1-2 | 1-12 |
| A | CN 113930805 A (TSINGHUA UNIVERSITY) 14 January 2022 (2022-01-14) description, paragraphs 57-122, and figures 1-7 | 1-12 |
| A | CN 215947416 U (WUHAN XINGDA HIGH TECHNOLOGY ENGINEERING CO., LTD.) 04 March 2022 (2022-03-04) entire document | 1-12 |
| A | CN 112899726 A (SUNGROW POWER SUPPLY CO., LTD.) 04 June 2021 (2021-06-04) entire document | 1-12 |
| A | CN 112899706 A (SUNGROW POWER SUPPLY CO., LTD.) 04 June 2021 (2021-06-04) entire document | 1-12 |
| A | CN 114086204 A (SICHUAN ENERGY INTERNET RESEARCH INSTITUTE, TSINGHUA UNIVERSITY) 25 February 2022 (2022-02-25) entire document | 1-12 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **04 September 2023** | **21 September 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/103189** |

**C.    DOCUMENTS CONSIDERED TO BE RELEVANT**

| Category* | Citation of document, with indication, where appropriate, of the relevant passages | Relevant to claim No. |
|---|---|---|
| A | WO 2015082130 A1 (COMMISSARIAT ENERGIE ATOMIQUE) 11 June 2015 (2015-06-11)<br>entire document | 1-12 |
| A | US 2007082239 A1 (SHIROMA IRIS L et al.) 12 April 2007 (2007-04-12)<br>entire document | 1-12 |
| A | JP 2017203203 A (HONDA MOTOR CO., LTD.) 16 November 2017 (2017-11-16)<br>entire document | 1-12 |

Form PCT/ISA/210 (second sheet) (July 2022)

<div align="center">

**INTERNATIONAL SEARCH REPORT**
Information on patent family members

</div>

International application No.

**PCT/CN2023/103189**

| Patent document cited in search report | | | Publication date (day/month/year) | Patent family member(s) | | | Publication date (day/month/year) |
|---|---|---|---|---|---|---|---|
| CN | 114967782 | A | 30 August 2022 | | None | | |
| CN | 113930805 | A | 14 January 2022 | CN | 113930805 | B | 09 September 2022 |
| CN | 215947416 | U | 04 March 2022 | | None | | |
| CN | 112899726 | A | 04 June 2021 | | None | | |
| CN | 112899706 | A | 04 June 2021 | | None | | |
| CN | 114086204 | A | 25 February 2022 | CN | 216445472 | U | 06 May 2022 |
| WO | 2015082130 | A1 | 11 June 2015 | EP | 3077575 | A1 | 12 October 2016 |
| | | | | FR | 3014451 | A1 | 12 June 2015 |
| | | | | FR | 3014451 | B1 | 01 January 2016 |
| US | 2007082239 | A1 | 12 April 2007 | US | 7981556 | B2 | 19 July 2011 |
| JP | 2017203203 | A | 16 November 2017 | US | 2017327960 | A1 | 16 November 2017 |
| | | | | JP | 6329989 | B2 | 23 May 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210754186